# EUROPEAN PATENT SPECIFICATION

(11) **EP 3 208 971 B1**
(45) Date of publication and mention of the grant of the patent: **23.01.2019**
(21) Application number: 15850171.8
(22) Date of filing: 12.03.2015
(51) Int. Cl.: H04L 12/24, H04L 12/26, H04L 12/721, H04L 12/707

(54) **METHOD, DEVICE AND SYSTEM FOR REDUCING CENTRALIZED PROTECTION SWITCHING TIME IN POTN SYSTEM**
VERFAHREN, VORRICHTUNG UND SYSTEM ZUR VERRINGERUNG DER ZENTRALISIERTEN SCHUTZSCHALTZEIT IN EINEM POTN-SYSTEM
PROCÉDÉ, DISPOSITIF, ET SYSTÈME PERMETTANT DE RÉDUIRE UN TEMPS DE COMMUTATION DE PROTECTION CENTRALISÉE DANS UN SYSTÈME POTN

(30) Priority: 15.10.2014 CN 201410545422
(43) Date of publication of application: 23.08.2017
(73) Proprietor: ZTE Corporation, Shenzhen, Guangdong 518057 (CN)
(72) Inventor: YIN, Chaoliang, Shenzhen Guangdong 518057 (CN)
(74) Representative: Studio Torta S.p.A.
(86) International application number: PCT/CN2015/074120
(87) International publication number: WO 2016/058320

(56) References cited:
- EP-A2- 1 345 458
- CN-A- 101 145 856
- CN-A- 101 150 462
- CN-A- 101 986 594
- US-A1- 2012 045 199
- DONG H WANG HUAWEI TECHNOLOGIES J: "Pseudowire Redundancy on S-PE; draft-ietf-pwe3-redundancy-spe-02.txt", PSEUDOWIRE REDUNDANCY ON S-PE; DRAFT-IETF-PWE3-REDUNDANCY-SPE-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 May 2014 (2014-05-23), pages 1-8, XP015099245, [retrieved on 2014-05-23]
- MIZRAHI MARVELL N SPRECHER NOKIA SIEMENS NETWORKS E BELLAGAMBA ERICSSON Y WEINGARTEN NOKIA SIEMENS NETWORKS T: "An Overview of Operations, Administration, and Maintenance (OAM) Mechanisms; draft-ietf-opsawg-oam-overview-05.txt", AN OVERVIEW OF OPERATIONS, ADMINISTRATION, AND MAINTENANCE (OAM) MECHANISMS; DRAFT-IETF-OPSAWG-OAM-OVERVIEW-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 5, 16 May 2011 (2011-05-16), pages 1-35, XP015075760, [retrieved on 2011-05-16]

## Description

### TECHNICAL FIELD

The present disclosure relates to the field of communications, and more particularly, to a method, device and system for reducing centralized protection switching time of a POTN (Packet-Optical Transport Network) system in the multi-service and high-capacity POTN system in which a PTN (Packet Transport Network) and an OTN (Optical Transport Network) are mixed.

### BACKGROUND

With more and more obvious trend of "OTN sinking" and "PTN floating", the demand for multi-service and large bearing by Ethernet, SDH (Synchronous Digital Hierarchy), OTN service and the like is becoming more and more urgent. Thus, the POTN system emerges. The packet-optical transport network (POTN) is a transport network which deeply mixes packet transport and optical transport technology. The POTN may support L2 switching (Ethernet/MPLS) and L1 switching (OTN/SDH) simultaneously based on a unified packet switching platform, so that functions of the POTN may be flexibly cut and added under different applications and network deployment scenarios. The POTN mainly implements the service transmission at a rate from GB/s to TB/s level, and is largely distributed in the communication access, metro and main transmission systems. The importance of the POTN is like a main line connected between two places, and once the main line fails, for example, the main line is destroyed, a large number of services will be interrupted. In view of this situation, the industry researchers specifically designed a reliable main line service protection system to improve the viability of the POTN transmission network, and complete and improve the protection switching technology.

The protection switching technology is an indispensable key technology in the PTN and OTN systems. With the convergence of the two technologies in recent years, and as the increase of the bandwidth, channel or slot number, the number of protection groups increases, thereby a fast, reliable and effective protection switching implementing method is particularly important. When the network fails, with the increase of service and capacity, in order to improve the POTN network generation capability, it is necessary to provide a relatively fast and reasonable protection switching mechanism for the bearer service of the POTN network, so that the affected main line service can be arranged quickly to a pre-assigned protection path for transmission, thereby recovering and protecting the affected service to a maximum extent.

The protection switching structure mainly includes a distributed control mode and a centralized control mode. The advantages of the distributed control mode lie in that there is no inefficiency problem and there is no limitation of backplane capacity. However, the disadvantages thereof are that it is only suitable for the protection of the stable protocol; once the development is completed, it is not easy to adjust the protocol later; and if adjusting the system, it involves a large change in hardware. The centralized control mode has the advantages of a short development cycle, a fast protocol adjustment, and no obvious functional defects, but the disadvantages are that the load efficiency is flawed, and a timeout occurs easily in the switching under multiple protection groups.

The current super capacity POTN usually adopts the centralized control mode, so it is very critical to solve the problems of the flawed load efficiency and the timeout in the switching under multiple protection groups.

This section provides background information related to the present disclosure which is not necessarily prior art.

Document by Dong H. Wang, Huawei Technologies J.: "Pseudowire redundancy on S-PE; draft-ietf-pwe3-redundancy-spe-02.txt", Internet Engineering Task force, IETF; 23 May 2014, pages 1-8, XP15099245, discloses multi-segment pseudowire (MS-PW) protection scenarios in which the pseudowire redundancy is provided on the switching-PE (S-PE).

Patent document EP1345458A2 discloses an apparatus for modelling a plurality of switching operations.

### SUMMARY

The embodiments of the present disclosure provide a method, a device and a system for reducing centralized protection switching time of a POTN system to solve the technical problems of how to avoid the deficiency of efficiency load and timeout of switching under multiple protection groups, according to the appended claims.

Embodiments of the present disclosure are implemented by the following technical solutions. The present disclosure provides a method for performing centralized protection switching of a packet-optical transport network POTN system according to claim 1.

Optionally, the determining at least one protection switching decision based on the parsing result of the soft pseudo-wire alarm message, includes:
pre-configuring a protection switching policy; and
executing at least one protection switching process according to the parsing result of the soft pseudo-wire alarm message and the pre-configured protection switching policy, and determining at least one protection switching decision accordingly.

Optionally, the protection switching process includes: a parallel processing mode.

Optionally, the executing at least one protection switching process according to the parsing result of the soft pseudo-wire alarm message and the pre-configured protection switching policy, includes: executing the at least one protection switching process in a programmable device FPGA according to the parsing result of the soft pseudo-wire alarm message and the pre-configured protection switching policy.

The present disclosure provides a device for performing centralized protection switching of a packet-optical transport network POTN system according to claim 5.

Optionally, the device further includes:
a protection switching configuration unit configured to pre-configure a protection switching policy;
wherein the protection switching algorithm implementing unit is configured to execute at least one protection switching process based on the parsing result of the soft pseudo-wire alarm message provided by the soft pseudo-wire HW message parsing unit and the pre-configured protection switching policy provided by the protection switching configuration unit, and determine at least one protection switching decision accordingly.

Optionally, the protection switching algorithm implementing unit executes the at least one protection switching process by using a parallel processing mode.

Optionally, the protection switching algorithm implementing unit includes a programmable device FPGA.

The present disclosure provides a system for performing centralized protection switching of a packet-optical transport network POTN system according to claim 9.

Optionally, the main control board is configured to send the soft pseudo-wire HW decision message to a hardware soft pseudo-wire HW high way according to a sending polling policy through an included programmable device FPGA; and
the service board and/or the cross board are configured to, after acquiring the soft pseudo-wire HW decision message, parse the soft pseudo-wire HW decision message and execute a corresponding protection switching operation according to the parsing result of the decision message.

The present disclosure provides a computer storage medium having stored therein computer-executable instructions for executing the above method.

The above technical solutions adopt the analogue soft pseudo-wire HW technology to encapsulate the alarm and the protection switching command, and set up relevant message formats, so that the protection channel can be quickly, reliably and effectively switched during the implementation of the protection switching procedure by the system, thereby significantly reducing the time for centralized protection switching.

This section provides a summary of various implementations or examples of the technology described in the disclosure, and is not a comprehensive disclosure of the full scope or all features of the disclosed technology.

### BRIEF DESCRIPTION OF THE DRAWINGS

Fig. 1 is a schematic diagram of a structure of the relevant centralized protection switching system;
Fig. 2 is a flow chart of a method for reducing centralized protection switching time of a POTN system provided by an embodiment of the present disclosure;
Fig. 3 is a schematic diagram of a structure of a centralized protection switching system provided by an embodiment of the present disclosure;
Fig. 4 is a schematic diagram of a structure for implementing the protection switching by a main control board FPGA according to an embodiment of the present disclosure;
Fig. 5 is a schematic diagram of a soft pseudo-wire HW alarm message format according to the embodiment of the present disclosure;
Fig. 6 is a schematic diagram of a soft pseudo-wire HW decision message format according to the embodiment of the present disclosure;
Fig. 7 is a flow chart of a quick protection switching implementation according to the embodiment of the present disclosure;
Fig. 8 is a schematic diagram of a device for reducing the centralized protection switching time of the POTN system provided by the embodiment of the present disclosure; and
Fig. 9 is a system for reducing the centralized protection switching time of the POTN system provided by the embodiment of the present disclosure.

### DETAILED DESCRIPTION

Hereinafter, the technical solutions of the present disclosure will be described in further detail with reference to the accompanying drawings and embodiments so that those skilled in the art will be able to better understand and practice the present disclosure, but the illustrated embodiments are not to be construed as limiting the present disclosure.

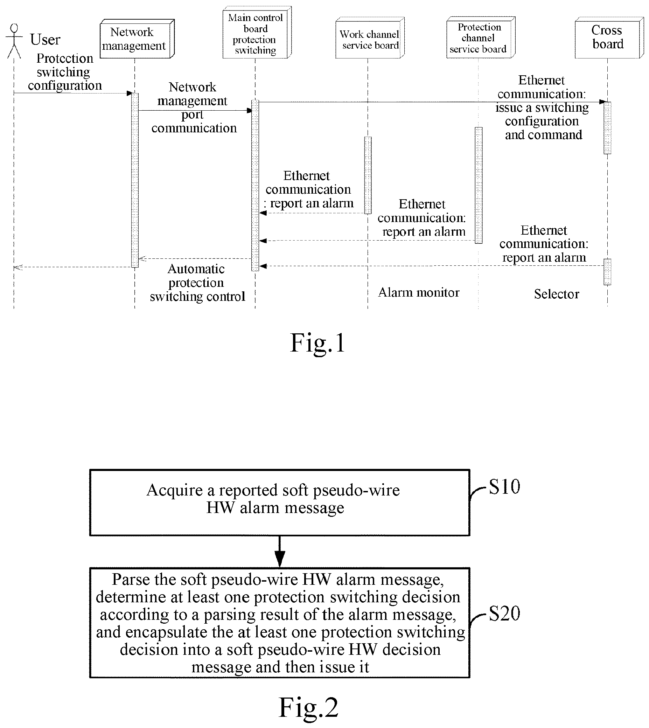

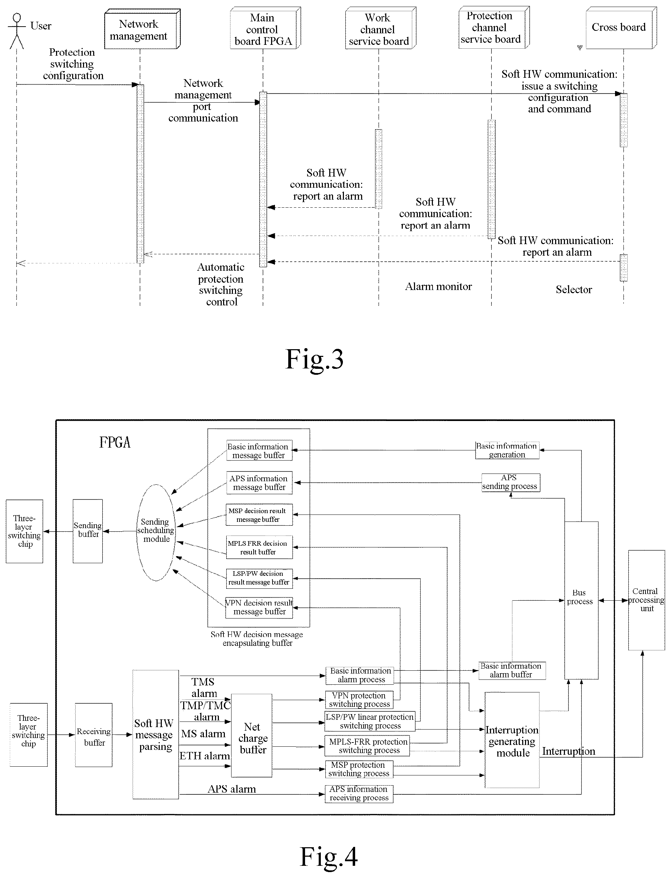

As shown in Figs. 2 and 3, a method for reducing centralized protection switching time of a POTN system provided by the embodiments of the present disclosure includes the following steps.

In S10, a reported soft pseudo-wire high way HW alarm message is acquired.

In S20, the soft pseudo-wire HW alarm message is parsed, at least one protection switching decision is determined according to the parsing result of the alarm message, the at least one protection switching decision is encapsulated into a soft pseudo-wire HW decision message, and then the soft pseudo-wire HW decision message is issued.

The method provided by the present embodiment encapsulates the alarm information reported by a service board and/or a cross board and a protection switching command issued by the main control board by using an analogue soft pseudo-wire HW technology, and based on the conventional centralized protection switching structure, re-defines the soft pseudo-wire HW message and formulates the relevant message format.

The embodiments of the present disclosure will be explained by using an example in which the main control board configures a protection switching policy, and after the service board detects and reports an alarm, the main control board completes a protection switching algorithm, and then sends a protection switching command to the service board, and finally the switching between work/protection channels is implemented by the cross board (selector). For the step S10, Fig. 4 is referred, which is a structural diagram of implementing the protection switching by the main control board FPGA. From an upstream direction of the alarm shown in Fig. 4, it can be seen that the alarm of the service board mainly includes: basic information, a segment layer TMS, a channel layer TMP/circuit layer TMC, a multi-protocol label switching layer MS, an Ethernet ETH, an automatic protection switching APS alarm, and the like.

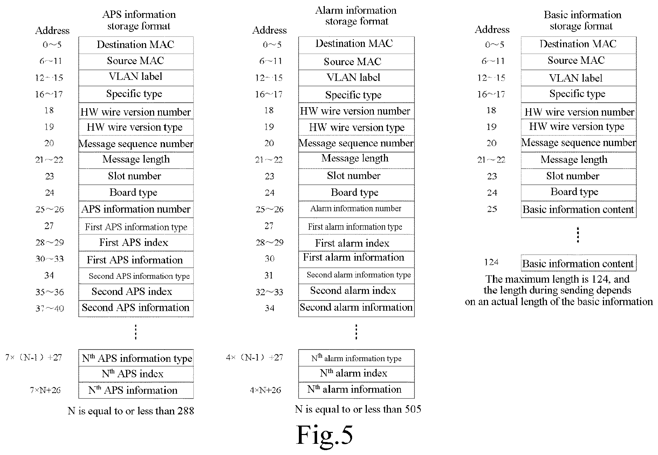

The service board encapsulates the above alarms according to the message encapsulation format provided in Fig. 5. The format is similar to that of an Ethernet message. The data packet may be forwarded to the main control board FPGA for parsing process via DA/SA and Vlan ID.

The soft pseudo-wire HW message shown in Fig. 5 defines three formats, but the three formats are actually similar and have the same 23-byte header. The three formats differ in that their payload portions are different depending on different types of alarms. The basic information is mainly used to transmit the basic information of the service board, such as a slot number and a board type, and may support up to 124 bytes of payload information. The APS alarm information is specially used to transmit alarm information of APS protection switching, and supports up to 288 pieces of APS alarm information. The TMS, TMP/TMC, MS, ETH and other alarm information are classified into one type, which may support 505 pieces of alarm information at most.

For the step S20, in the present embodiment, the step of parsing the soft pseudo-wire HW alarm message and determining at least one protection switching decision based on the parsing result of the alarm message includes the following steps.

In S201, the soft pseudo-wire HW alarm message is buffered and parsed.

In S202, a protection switching policy is pre-configured, at least one protection switching process is performed according to the parsing result of the alarm message and the pre-configured protection switching policy, and at least one protection switching decision is determined accordingly.

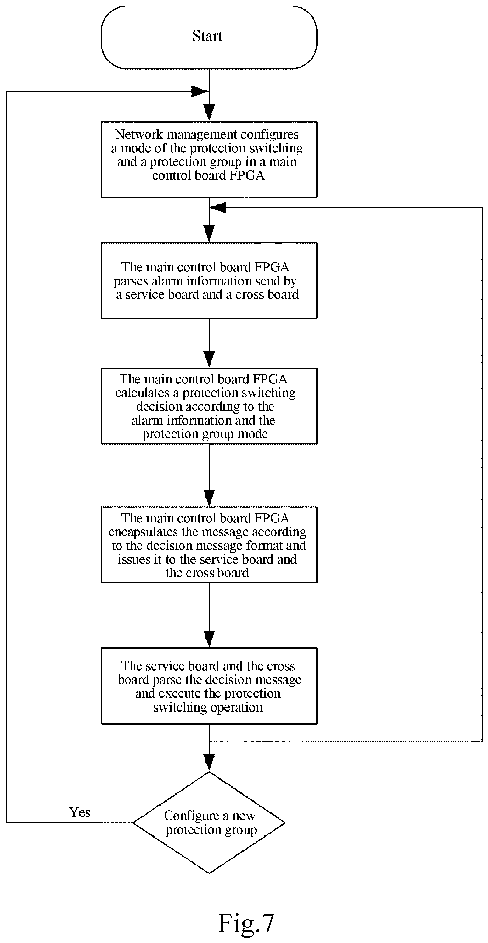

First, the configuration of the main control board by the main control board APS software is obtained, such as a protection switching type, a protection group and so on. The whole protection switching configuration and operating method is shown in the flow chart of Fig. 7. The method only needs to be configured by software, and the rest of the protection switching algorithm and operation are all implemented by the soft pseudo-wire HW communication between the main control FPGA and the service board.

After receiving the soft pseudo-wire HW alarm message sent by the service board, the main control board buffers the alarm information packaged and sent by each service board, then, according to the protection switching mode configured by the main control board APS software, the main control board performs respectively a multiplex section protection MSP switching processing, a multi-protocol label switching MPLS-fast reroute FRR protection switching processing, a label switching path LSP/pseudo-wire PW linear protection switching processing, a virtual private network VPN protection switching processing and an APS information reception processing, etc., to complete the protection switching algorithm, and be ready to issue the protection switching decision.

In the present embodiment, the protection switching process is optionally set to be a parallel processing mode. All of the protection switching algorithms may be carried out at the same time, which reduces the operating time of the protection switching, especially in the POTN system with many protection groups.

In addition, as shown in Fig. 1, the centralized control mode is mainly composed of three parts: an alarm monitor, a work/protection channel selector and a protection switching control (APST), and an accuracy of the switching time is determined by these three parts. In the related method, the alarm monitor is usually completed by a service board framer. The alarm and protection information transmission channel is realized by an Ethernet port. The protection switching control is mainly performed by a protection algorithm unit in the main control board APS software. When using the related mode, the protection switching time is mainly restricted by the implementing solution of the protection algorithm unit, and the alarm and protection information transmission channel. These two functions are operated at a software level, and are not directly implemented through fast hardware actuators, such as the programmable device (FPGA).

Therefore, in the present embodiment, the at least one protection switching process is performed in the programmable device FPGA according to the parsing result of the alarm message and the pre-configured protection switching policy. The message between the main control board and the service board and/or the cross board is encapsulated and transmitted by means of FPGA analogue soft pseudo-wire (soft pseudo-wire HW), thus the message is capable of being switched in the fastest time, which is the closest processing to the underlying hardware, and can also save the time at most.

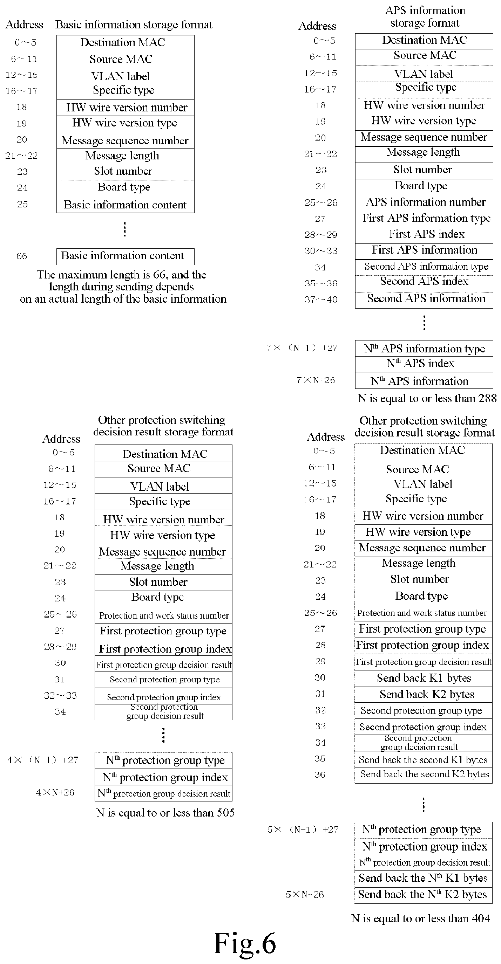

As shown in Fig. 6, the format of soft pseudo-wire HW message used for completing the protection switching algorithm for the main control board and issuing the protection switching decision to the service board and the cross board is similar to the format of the alarm message in the receiving direction, which is also composed of 23 headers of the message and N payload bytes, in which N is determined by different types of the decision messages.

In the present embodiment, the issued decision message defines four formats, including basic information, APS decision information, MSP decision information, and other protection switching decision information (including MPLS FRR decision information, LSP/PW decision information, and VPN decision result information). As shown in Fig. 3, each encapsulated message is scheduled and sent to the hardware soft pseudo-wire HW high way according to the sending polling method in the FPGA processing of the main control board, and finally is forwarded through three-layer switching chip. The service board and the cross board receive the decision message, and parse the protection switching command according to a corresponding format, so that the switching work of the corresponding work and the protection channel is completed.

It can be seen that in the embodiments of the present disclosure, firstly the received soft pseudo-wire HW alarm message encapsulated by the service board and/or the cross board is parsed, the protection switching algorithm is directly implemented in the programmable device FPGA, and the upper layer APS software only needs to complete the configuration of the protection switching. Then, according to the protection switching mode and the alarm type configured by the network manager (device management interface), at least one protection switching decision is determined, and then the at least one protection switching decision is encapsulated into a soft pseudo-wire HW decision message and issued to the service board and/or the cross board to execute the switching operation. With this method, the protection channel can be quickly, reliably and effectively switched during the implementation of the protection switching procedure by the system, thus significantly reducing the time of centralized protection switching.

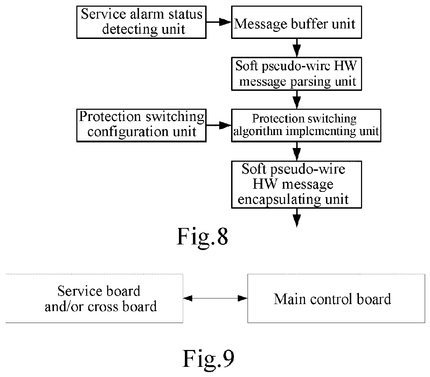

As shown in Fig. 8, an embodiment of the present disclosure also provides a device for reducing centralized protection switching time of a POTN system, including: a service alarm status detection unit, a soft pseudo-wire HW message parsing unit, a protection switching algorithm implementing unit, and a soft pseudo-wire HW message encapsulation unit.

The service alarm status detection unit is configured to obtain a reported soft pseudo-wire high way HW alarm message.

The soft pseudo-wire HW message parsing unit is configured to parse the soft pseudo-wire HW alarm message.

The protection switching algorithm implementing unit is configured to determine at least one protection switching decision based on the parsing result of the alarm message.

The soft pseudo-wire HW message encapsulation unit is configured to encapsulate the at least one protection switching decision into a soft pseudo-wire HW decision message and issue it. In the present embodiment, the device for reducing the centralized protection switching time of the POTN system further includes: a message buffer unit, and a protection switching configuration unit.

The message buffer unit is configured to buffer the soft pseudo-wire HW alarm message. The protection switching configuration unit is configured to pre-configure a protection switching policy.

The protection switching algorithm implementing unit is configured to perform at least one protection switching process based on the parsing result of the alarm message provided by the soft pseudo-wire HW message parsing unit and the pre-configured protection switching policy provided by the protection switching configuration unit, and determine at least one protection switching decision accordingly.

The protection switching algorithm implementing unit executes the at least one protection switching process by using a parallel processing mode.

The protection switching algorithm implementing unit is a programmable device FPGA.

The device for reducing the centralized protection switching time of the POTN system provided by the embodiments of the disclosure firstly parses the received soft pseudo-wire HW alarm message encapsulated by the service board and/or the cross board, and directly implements the protection switching algorithm in the programmable device FPGA. The upper layer APS software only needs to complete the configuration of the protection switching. Then, according to the protection switching mode and the alarm type configured by the network management, the device determines at least one protection switching decision, and then encapsulates the at least one protection switching decision into a soft pseudo-wire HW decision message and issues it to the service board and/or the cross board to execute the switching operation. In this way, the protection channel can be quickly, reliably and effectively switched during the implementation of the protection switching procedure, thus significantly reducing the time of centralized protection switching.

Accordingly, referring to Fig. 3, the embodiment of the present disclosure also provides a system for reducing centralized protection switching time of a POTN system. As shown in Fig. 9, the system includes: a service board and/or cross board, and a main control board. The service board and/or cross board is configured to report a soft pseudo-wire HW alarm message.

The main control board is configured to obtain the soft pseudo-wire HW alarm message and parse the soft pseudo-wire HW alarm message, determine at least one protection switching decision based on a parsing result of the alarm message, encapsulate the at least one protection switching decision into a soft pseudo-wire HW decision message and issue it. The programmable device FPGA included in the main control board is configured to transmit the soft pseudo-wire HW decision message to a hardware soft pseudo-wire HW high way according to a sending polling policy.

The service board and/or the cross board is configured to, after obtaining the soft pseudo-wire HW decision message, parse the soft pseudo-wire HW decision message, and execute a corresponding protection switching work according to the parsing result of the decision message.

The specific implementations of the protection switching may be referred to above, which are not elaborated herein.

It will be understood by those skilled in the art that all or a part of the steps of the embodiments described above may be implemented by using a computer program that may be stored in a computer readable storage medium. The computer program is executed on a corresponding hardware platform (such as systems, apparatuses, equipment, devices, etc.). When being executed, one of the steps of the method embodiment or a combination thereof is included.

Alternatively, all or a part of the steps of the embodiments described above may also be implemented by using an integrated circuit. These steps may be implemented by being separately made into individual integrated circuit modules, or making a plurality of modules or steps thereof into a single integrated circuit module.

The devices/function modules/functional units in the above embodiments may be implemented by using a general purpose computing device, which may be centralized on a single computing device or may be distributed over a network consisting of a plurality of computing devices.

The devices/functional modules/functional units in the above embodiments may be stored in a computer-readable storage medium when they are in the form of software function modules and are sold or used as stand-alone products. The above-mentioned computer-readable storage medium may be a read-only memory, a disk, an optical disk, or the like.

## Claims

1. A method for performing centralized protection switching of a packet-optical transport network POTN system, applied in a main control board, the method comprising:
acquiring (S10) a reported soft pseudo-wire high way, HW, alarm message;
parsing the soft pseudo-wire HW alarm message, determining at least one protection switching decision based on a parsing result of the soft pseudo-wire HW alarm message, and encapsulating the at least one protection switching decision into a soft pseudo-wire HW decision message and issuing the soft pseudo-wire HW decision message to a service board and/or a cross board (S20),
wherein the soft pseudo-wire HW alarm message and the soft pseudo-wire HW decision message are encapsulated and transmitted by means of FPGA analogue soft pseudo-wire.

2. The method of claim 1, wherein the determining (S20) at least one protection switching decision based on the parsing result of the soft pseudo-wire HW alarm message, comprises:
pre-configuring a protection switching policy; and
executing at least one protection switching process according to the parsing result of the soft pseudo-wire HW alarm message and the pre-configured protection switching policy, and then determining the at least one protection switching decision.

3. The method of claim 2, wherein the protection switching process comprises: a parallel processing mode in which all protection switching algorithms are carried out at the same time.

4. The method of claim 2, wherein the executing at least one protection switching process according to the parsing result of the soft pseudo-wire HW alarm message and the pre-configured protection switching policy, comprises:
executing the at least one protection switching process in a programmable device FPGA according to the parsing result of the soft pseudo-wire HW alarm message and the pre-configured protection switching policy.

5. A device for performing centralized protection switching of a packet-optical transport network POTN system, the device comprising:
a service alarm status detection unit configured to acquire a reported soft pseudo-wire high way, HW, alarm message;
a soft pseudo-wire HW message parsing unit configured to parse the soft pseudo-wire HW alarm message;
a protection switching algorithm implementing unit configured to determine at least one protection switching decision based on a parsing result of the soft pseudo-wire HW alarm message; and
a soft pseudo-wire HW message encapsulation unit configured to encapsulate the at least one protection switching decision into a soft pseudo-wire HW decision message and issue the soft pseudo-wire HW decision message to a service board and/or a cross board,
wherein the soft pseudo-wire HW alarm message and the soft pseudo-wire HW decision message are encapsulated and transmitted by means of FPGA analogue soft pseudo-wire.

6. The device of claim 5, further comprising:
a protection switching configuration unit configured to pre-configure a protection switching policy;
wherein the protection switching algorithm implementing unit is configured to execute at least one protection switching process based on the parsing result of the soft pseudo-wire HW alarm message provided by the soft pseudo-wire HW message parsing unit and the pre-configured protection switching policy provided by the protection switching configuration unit, and determine the at least one protection switching decision accordingly.

7. The device of claim 6, wherein the protection switching algorithm implementing unit executes the at least one protection switching process by using a parallel processing mode in which all protection switching algorithms are carried out at the same time.

8. The device of claim 6, wherein the protection switching algorithm implementing unit comprises a programmable device FPGA.

9. A system for performing centralized protection switching of a packet-optical transport network POTN system, comprising:
a service board and/or a cross board configured to report a soft pseudo-wire high way, HW, alarm message; and
a main control board configured to acquire the soft pseudo-wire HW alarm message and parse the soft pseudo-wire HW alarm message, determine at least one protection switching decision based on a parsing result of the soft pseudo-wire HW alarm message, and encapsulate the at least one protection switching decision into a soft pseudo-wire HW decision message and issue the soft pseudo-wire HW decision message to the service board and/or the cross board,
wherein the soft pseudo-wire HW alarm message and the soft pseudo-wire HW decision message are encapsulated and transmitted by means of FPGA analogue soft pseudo-wire.

10. The system of claim 9, wherein
the main control board is configured to send the soft pseudo-wire HW decision message to a hardware soft pseudo-wire HW high way according to a polling policy through a programmable device FPGA included in the main control board; and
the service board and/or the cross board are further configured to, after acquiring the soft pseudo-wire HW decision message, parse the soft pseudo-wire HW decision message and execute a corresponding protection switching operation according to the parsing result of the decision message.

11. A computer storage medium having stored therein computer-executable instructions which, when executed by a computer, cause the computer to carry out the steps of any one of claims 1 to 4.

12. A computer program comprising instructions which, when the program is executed by a computer, cause the computer to carry out the steps of any one of claims 1 to 4.

## Patentansprüche

1. Ein Verfahren zum Durchführen einer zentralisierten Schutzumschaltung eines paketoptischen Transportnetzwerk (POTN) -Systems, das in einer Hauptsteuerplatine eingesetzt wird, wobei das Verfahren Folgendes umfasst:
Erfassen (S10) einer gemeldeten Soft-*Pseudowire*-HW (*high way*)-Alarmmeldung;
syntaktisch Analysieren der Soft-Pseudowire-HW-Alarmmeldung, Bestimmen mindestens einer Schutzumschaltungs-Entscheidung basierend auf einem Analyse-Ergebnis der Soft-*Pseudowire-*HW-Alarmmeldung und Kapseln der mindestens einen Schutzumschaltungs-Entscheidung in eine Soft-*Pseudowire*-HW-Entscheidungsmeldung und Ausgeben der Soft-*Pseudowire*-HW-Entscheidungsmeldung an ein *Service Board* und/oder ein *Cross Board* (S20),
wobei die Soft-Pseudowire-HW-Alarmmeldung und die Soft-*Pseudowire*-HW-Entscheidungsmeldung mittels FPGA-Analog-Soft-*Pseudowire* gekapselt und übertragen werden.

2. Das Verfahren nach Anspruch 1, wobei das Bestimmen (S20) mindestens einer Schutzumschaltungs-Entscheidung basierend auf dem Analyse-Ergebnis der Soft-*Pseudowire-*HW-Alarmmeldung Folgendes umfasst:
Vorkonfigurieren einer Schutzumschaltungs-Richtlinie; und
Ausführen mindestens eines Schutzumschaltvorgangs gemäß dem Analyse-Ergebnis der Soft-*Pseudowire-*HW-Alarmmeldung und der vorkonfigurierten Schutzumschaltungs-Richtlinie und dann Bestimmen der mindestens einen Schutzschaltungs-Entscheidung.

3. Das Verfahren nach Anspruch 2, wobei der Schutzumschaltvorgang Folgendes umfasst: einen Parallelverarbeitungsmodus, in dem alle Schutzumschaltalgorithmen gleichzeitig ausgeführt werden.

4. Das Verfahren nach Anspruch 2, wobei das Ausführen mindestens eines Schutzumschaltvorgangs gemäß dem Analyse-Ergebnis der Soft-*Pseudowire-*HW-Alarmmeldung und der vorkonfigurierten Schutzumschaltungs-Richtlinie Folgendes umfasst:
Ausführen des mindestens einen Schutzumschaltvorgangs in einem programmierbaren FPGA-Gerät gemäß dem Analyse-Ergebnis der Soft-*Pseudowire-*HW-Alarmmeldung und der vorkonfigurierten Schutzumschaltungs-Richtlinie.

5. Eine Vorrichtung zum Durchführen einer zentralisierten Schutzumschaltung eines paketoptischen Transportnetzwerk (POTN) -Systems, wobei die Vorrichtung Folgendes umfasst:
eine Servicealarm-Statuserkennungseinheit, die konfiguriert ist, um eine gemeldete Soft-*Pseudowire*-HW (*high way*)-Alarmmeldung zu erfassen;
eine Soft-*Pseudowire*-HW-Meldungs-Analyseeinheit, die konfiguriert ist, um die Soft-*Pseudowire-*HW-Alarmmeldung syntaktisch zu analysieren;
eine Schutzumschaltalgorithmus-Implementierungseinheit, die konfiguriert ist, um mindestens eine Schutzumschaltungsentscheidung zu ermitteln basierend auf einem Analyse-Ergebnis der Soft-*Pseudowire*-HW-Alarmmeldung; und
eine Soft-*Pseudowire*-HW-Meldungskapselungseinheit, die konfiguriert ist, um die mindestens eine Schutzumschaltungsentscheidung in eine Soft-*Pseudowire*-HW-Entscheidungsmeldung zu kapseln und die Soft*-Pseudowire-*HW-Entscheidungsmeldung an ein *Service Board* und/oder eine *Cross Board* auszugeben,
wobei die Soft-*Pseudowire*-HW-Alarmmeldung und die Soft-*Pseudowire*-HW-Entscheidungsmeldung gekapselt werden und mittels FPGA-Analog-Soft-Pseudowire übertragen werden.

6. Die Vorrichtung nach Anspruch 5, die ferner Folgendes umfasst:
eine Schutzumschaltungs-Konfigurationseinheit, die konfiguriert ist, um eine Schutzumschaltungs-Richtlinie vorzukonfigurieren;
wobei die Schutzumschaltungsalgorithmus-Implementierungseinheit konfiguriert ist, um mindestens einen Schutzumschaltungsvorgang auszuführen, basierend auf dem von der Soft-*Pseudowire*-HW-Meldungs-Analyseeinheit bereitgestellten Analyse-Ergebnis der Soft-*Pseudowire-*HW-Alarmmeldung und der von der Schutzumschaltungs-Konfigurationseinheit bereitgestellten vorkonfigurierten Schutzumschaltungs-Richtlinie, und um die mindestens eine Schutzumschaltungs-Entscheidung entsprechend zu bestimmen.

7. Die Vorrichtung nach Anspruch 6, wobei die Schutzumschaltungsalgorithmus-Implementierungseinheit den mindestens einen Schutzumschaltungsvorgang unter Verwendung eines Parallelverarbeitungsmodus ausführt, bei dem alle Schutzumschaltungsalgorithmen gleichzeitig ausgeführt werden.

8. Die Vorrichtung nach Anspruch 6, wobei die
Schutzumschaltungsalgorithmus-Implementierungseinheit ein programmierbares FPGA-Gerät umfasst.

9. Ein System zum Durchführen einer zentralisierten Schutzumschaltung eines paketoptischen Transportnetzwerk (POTN) -Systems, das Folgendes umfasst:
ein *Service Board* und/oder ein *Cross Board,* die konfiguriert sind, um eine weiche Soft-*Pseudowire*-HW (*high way*)-Alarmmeldung zu melden; und
eine Hauptsteuerplatine, die konfiguriert ist, um Folgendes zu bewerkstelligen: Erfassen der Soft-Pseudowire-HW-Alarmmeldung und syntaktisch Analysieren der Soft-Pseudowire-HW-Alarmmeldung, Bestimmen von mindestens einer Schutzumschaltungsentscheidung basierend auf einem Analyse-Ergebnis der Soft-*Pseudowire*-HW-Alarmmeldung, und Kapseln der mindestens einen Schutzumschaltungsentscheidung in eine Soft-*Pseudowire*-HW-Entscheidungsmeldung und Ausgeben der Soft*-Pseudowire-*HW-Entscheidungsmeldung an das *Service Board* und/oder das *Cross Board,*
wobei die Soft-*Pseudowire-*HW-Alarmmeldung und die Soft-*Pseudowire*-HW-Entscheidungsmeldung mittels FPGA-Analog-Soft-Pseudowire gekapselt und übertragen werden.

10. Das System nach Anspruch 9, wobei
die Hauptsteuerplatine konfiguriert ist, um die Soft-*Pseudowire*-HW-Entscheidungsmeldung an einen Hardware-Soft-*Pseudowire*-HW-High *way* gemäß einer *Polling-*Richtlinie über ein programmierbares FPGA-Gerät zu senden, das in der Hauptsteuerplatine enthalten ist; und wobei
das *Service Board* und/oder das *Cross Board* ferner konfiguriert sind, um nach dem Erfassen der Soft-*Pseudowire*-HW-Entscheidungsmeldung die Soft-*Pseudowire-*HW-Entscheidungsmeldung syntaktisch zu analysieren und einen entsprechenden Schutzumschaltungsvorgang gemäß dem Analyse-Ergebnis der Entscheidungsmeldung auszuführen.

11. Ein Computerspeichermedium mit darin gespeicherten computerausführbaren Anweisungen, die, wenn sie von einem Computer ausgeführt werden, bewirken, dass der Computer die Schritte nach irgendeinem der Ansprüche von 1 bis 4 ausführt.

12. Ein Computerprogramm, das Anweisungen umfasst, die, wenn das Programm von einem Computer ausgeführt wird, bewirken, dass der Computer die Schritte nach irgendeinem der Ansprüche von 1 bis 4 ausführt.

## Revendications

1. Méthode de réalisation de commutation de protection centralisée d'un système de réseau de transport optique de paquet POTN, appliqué dans un circuit de commande principal, la méthode comprenant :
l'acquisition (S10) d'un message d'alarme de canal, HW, pseudo-fil logique signalé ;
l'analyse du message d'alarme HW pseudo-fil logique, la détermination d'au moins une décision de commutation de protection d'après un résultat d'analyse du message d'alarme HW pseudo-fil logique, et l'encapsulation de l'au moins une décision de commutation de protection dans un message de décision HW pseudo-fil logique et l'émission du message de décision HW pseudo-fil logique à un circuit de service et/ou un circuit interconnecteur (S20),
dans laquelle le message d'alarme HW pseudo-fil logique et le message de décision HW pseudo-fil logique sont encapsulés et transmis au moyen d'un pseudo-fil logique analogique FPGA.

2. Méthode selon la revendication 1, dans laquelle la détermination (S20) d'au moins une décision de commutation de protection d'après le résultat d'analyse du message d'alarme HW pseudo-fil logique, comprend :
la préconfiguration d'une règle de commutation de protection ; et
l'exécution d'au moins un procédé de commutation de protection selon le résultat d'analyse du message d'alarme HW pseudo-fil logique et la règle de commutation de protection préconfigurée, puis la détermination de l'au moins une décision de commutation de protection.

3. Méthode selon la revendication 2, dans laquelle le procédé de commutation de protection comprend : un mode de traitement parallèle dans lequel tous les algorithmes de commutation de protection sont exécutés en même temps.

4. Méthode selon la revendication 2, dans laquelle l'exécution d'au moins un procédé de commutation de protection selon le résultat d'analyse du message d'alarme HW pseudo-fil logique et la règle de commutation de protection préconfigurée, comprend :
l'exécution de l'au moins un procédé de commutation de protection dans un FPGA de dispositif programmable selon le résultat d'analyse du message d'alarme HW pseudo-fil logique et la règle de commutation de protection préconfigurée.

5. Dispositif de réalisation de commutation de protection centralisée d'un système de réseau de transport optique de paquet POTN, le dispositif comprenant :
une unité de détection de statut d'alarme de service configurée pour acquérir un message d'alarme de canal, HW, pseudo-fil logique signalé ;
une unité d'analyse de message HW pseudo-fil logique configurée pour analyser le message d'alarme HW pseudo-fil logique ;
une unité d'implémentation d'algorithme de commutation de protection configurée pour déterminer au moins une décision de commutation de protection d'après un résultat d'analyse du message d'alarme HW pseudo-fil logique ; et
une unité d'encapsulation de message HW pseudo-fil logique configurée pour encapsuler l'au moins une décision de commutation de protection dans un message de décision HW pseudo-fil logique et émettre le message de décision HW pseudo-fil logique à un circuit de service et/ou un circuit interconnecteur,
dans lequel le message d'alarme HW pseudo-fil logique et le message de décision HW pseudo-fil logique sont encapsulés et transmis au moyen d'un pseudo-fil logique analogique FPGA.

6. Dispositif selon la revendication 5, comprenant en outre :
une unité de configuration de commutation de protection configurée pour préconfigurer une règle de commutation de protection ;
dans lequel l'unité d'implémentation d'algorithme de commutation de protection est configurée pour exécuter au moins un procédé de commutation de protection d'après le résultat d'analyse du message d'alarme HW pseudo-fil logique fourni par l'unité d'analyse de message HW pseudo-fil logique et la règle de commutation de protection préconfigurée fournie par l'unité de configuration de commutation de protection, et déterminer l'au moins une décision de commutation de protection en conséquence.

7. Dispositif selon la revendication 6, dans lequel l'unité d'implémentation d'algorithme de commutation de protection exécute l'au moins un procédé de commutation de protection en utilisant un mode de traitement parallèle dans lequel tous les algorithmes de commutation de protection sont exécutés en même temps.

8. Dispositif selon la revendication 6, dans lequel l'unité d'implémentation d'algorithme de commutation de protection comprend un FPGA de dispositif programmable.

9. Système de réalisation de commutation de protection centralisée d'un système de réseau de transport optique de paquet POTN, comprenant :
un circuit de service et/ou un circuit interconnecteur configurés pour signaler un message d'alarme de canal, HW, pseudo-fil ; et
un circuit de commande principal configuré pour acquérir le message d'alarme HW pseudo-fil logique et analyser le message d'alarme HW pseudo-fil logique, déterminer au moins une décision de commutation de protection d'après un résultat d'analyse du message d'alarme HW pseudo-fil logique, et encapsuler l'au moins une décision de commutation de protection dans un message de décision HW pseudo-fil logique et émettre le message de décision HW pseudo-fil logique au circuit de service et/ou au circuit interconnecteur,
dans lequel le message d'alarme HW pseudo-fil logique et le message de décision HW pseudo-fil logique sont encapsulés et transmis au moyen d'un pseudo-fil logique analogique FPGA.

10. Système selon la revendication 9, dans lequel
le circuit de commande principal est configuré pour envoyer le message de décision HW pseudo-fil logique à un canal HW pseudo-fil logique matériel selon une règle d'invitation à émettre par le biais d'un FPGA de dispositif programmable inclus dans le circuit de commande principal ; et
le circuit de service et/ou le circuit interconnecteur sont en outre configurés pour, après acquisition du message de décision HW pseudo-fil logique, analyser le message de décision HW pseudo-fil logique, et exécuter une opération de commutation de protection correspondante selon le résultat d'analyse du message de décision.

11. Support de stockage sur ordinateur dans lequel sont stockées des instructions exécutables par ordinateur qui, lorsqu'elles sont exécutées par un ordinateur, amènent l'ordinateur à réaliser les étapes de l'une quelconque des revendications 1 à 4.

12. Programme d'ordinateur comprenant des instructions qui, lorsque le programme est exécuté par un ordinateur, amènent l'ordinateur à réaliser les étapes de l'une quelconque des revendications 1 à 4.
